# EUROPÄISCHE PATENTSCHRIFT

(11) **EP 4 314 585 B1**
(45) Veröffentlichungstag und Bekanntmachung des Hinweises auf die Patenterteilung: **03.12.2025**
(21) Anmeldenummer: 22711048.3
(22) Anmeldetag: 08.03.2022
(51) Int. Cl.: B60K 6/48, B60K 6/485, F16D 25/0638, F16D 25/10, F16D 25/12, B60K 6/387, B60K 6/547

(54) **MEHRFACHLAMELLENKUPPLUNGSANORDNUNG, INSBESONDERE EINE DREIFACHLAMELLENKUPPLUNG MIT VERBUNDENEN AUSGLEICHSRÄUMEN**
ASSEMBLY WITH SEVERAL MULTIPLE LAMELLAE CLUTCHES, IN PARTICULAR AN ASSEMBLY WITH THREE MULTIPLE LAMELLAE CLUTCHES WITH CONNECTED COMPENSATION SPACES
ENSEMBLE AVEC PLUSIEURS EMBRAYAGES À LAMELLES MULTIPLES, NOTAMMENT UN ENSEMBLE AVEC TROIS EMBRAYAGES À LAMELLES MULTIPLES AVEC D'ESPACES DE COMPENSATION CONNECTÉS

(30) Priorität: 29.03.2021 DE 102021203149; 06.07.2021 DE 102021207065
(43) Veröffentlichungstag der Anmeldung: 07.02.2024
(73) Patentinhaber: Magna PT B.V. & Co. KGaA, 74199 Untergruppenbach (DE)
(72) Erfinder: GREMPLINI, Hansi, 74379 Ingersheim (DE); COKDOGRU, Inan, 74924 Neckarbischofsheim (DE)
(74) Vertreter: Euler, Matthias
(86) Internationale Anmeldenummer: PCT/EP2022/055843
(87) Internationale Veröffentlichungsnummer: WO 2022/207249

(56) Entgegenhaltungen:
- DE-A1- 10 115 453
- DE-A1- 102009 059 929
- DE-A1- 102017 206 215
- DE-A1- 102018 008 932
- DE-A1- 102019 104 074
- DE-A1- 102019 135 018
- DE-A1- 102020 108 426
- FR-A1- 3 056 660

## Beschreibung

Die vorliegende Erfindung betrifft eine Mehrfachlamellenkupplungsanordnung, insbesondere eine Dreifachlamellenkupplung mit einer ersten, einer zweiten und einer dritten Reibkupplung, die radial versetzt zueinander angeordnete Lamellenpakte auf Lamellenträgern aufweisen, mit einem ersten Kolben, einem zweiten Kolben und einem dritten Kolben zur Aktuierung der ersten, zweiten und dritten Reibkupplung, wobei ein erster, ein zweiter und ein dritter Fliehölausgleichskolben zusammen mit jeweils dem ersten, dem zweiten und dem dritten Kolben Fliehölausgleichsräume bildet.

### Stand der Technik

Doppelkupplungen für einen Antriebsstrang sind beispielsweise aus der EP 2 905 492 B1 bekannt. Solche Kupplungsanordnungen dienen in Kraftfahrzeugantriebssträngen dazu, einen Antriebsmotor wie einen Verbrennungsmotor mit einem Getriebe wie einem Stufengetriebe zu verbinden. Die darin enthaltene Kupplung dient beispielsweise zum Anfahren und/oder zum Unterbrechen des Leistungsflusses, sofern in dem Getriebe eine Gangstufe gewechselt werden soll. Bei nasslaufenden Reibkupplungen ist es bekannt, diese fluidisch zu betätigen. Hierzu ist es ebenfalls bekannt, eine Drehdurchführung zwischen einem Gehäusezapfen und einem Nabenglied vorzusehen, wobei über die Drehdurchführung Fluid zum Kühlen und zur Betätigung der Kupplung bereitgestellt wird.

Bei einem solchen offenen System versucht man, die teilweise störenden Fliehkrafteinflüsse auf rotierende Betätigungskolben, nämlich Druckerhöhungen aufgrund des bei Rotation aufgrund der Fliehkraft nach außen geschleuderten zur Betätigung der Kupplung vorgesehenen Kühlöls, durch die Bereitstellung entsprechender Kompensationsräume auszugleichen, in denen ein entsprechender Gegendruck erzeugt wird. Der Betätigungskolben ist dann als Folge beidseitig von Ölräumen umgeben, was zu einem guten Fliehölausgleich führt. Die Ölräume sind dabei Druckölräume und Fliehölausgleichsräume, wobei letzterer von Fliehölausgleichskolben gebildet wird. Als Fliehöl wird der Teil des Kühlöl bezeichnet, der durch Fliehkraft bewegt wird.

Solche Doppelkupplungen werden auch für die hybridische Antriebssystem in einem Doppelkupplungsgetriebe verwendet. So wird beispielsweise aus der DE 10 2010 004 711 B1 ein Design mit einer an einem der beiden Teilgetriebe angebundenen elektrischen Maschine bekannt.

Die Anbindung der elektrischen Maschine an eine der Teilgetriebe, dem zweiten Teilgetriebe TG2 mit den Gangstufen 2/4/6 oder dem ersten Teilgetriebe TG1 mit den Gangstufen 1/3/5/7, erlaubt keine Schaltung im rein elektrischen Betrieb ohne Zugkraftunterbrechung. Eine Schaltung im rein elektrischen Betrieb kann in einem 2,5 Hybridtyp entweder mit Zugkraftunterbrechung oder über ein Stützmoment des Verbrennungsmotors erfolgen. Damit kann die Vermeidung von Abgasen nicht sichergestellt werden, was für den Messzyklus eines Hybridfahrzeugs nachteilig ist.

In einem P2 Hybridtyp treten die Probleme nicht auf, allerdings erfordert die P2 Konfiguration eine weitere Kupplung K0 zwischen Verbrennungsmotor und elektrischer Maschine. Allerdings ist der Bauraum begrenzt, so dass eine Dreifachlamellenkupplung zum Einsatz kommt.

Eine solche dreifache Kupplung ist beispielsweise aus der DE 10 2019 104 073 A1 bekannt.

Aus der DE 10 2017 206 215 A1 ist eine Mehrfachlamellenkupplungsanordnung mit drei Reibkupplungen bekannt, die radial versetzt zueinander angeordnete Lamellenpakete aufweisen, mit Kolben zur Aktuierung der Reibkupplungen, wobei die Lamellenträger an einer Hauptnabe angebunden sind und eine Zahnkranzträgerplatte aufweisen.

DE 10 2019 135 018 A1 zeigt eine Mehrfachlamellenkupplungsanordnung, wobei Reibkupplungen über einen gemeinsamen Lamellenträger verfügen. Weiterhin zeigt die Druckschrift eine Stützstruktur an der Eingangsnabe, die mit einem der Lamellenträger verbunden ist.

DE 10 2018 008 932 A1 betrifft ein Hybrid-Doppelkupplungsgetriebe mit einem ersten Teilgetriebe, mit einem zweiten Teilgetriebe, mit einer Trennkupplung. Die erste Kupplung weist einen ersten Außenlamellenträger, die zweite Kupplung einen zweiten Außenlamellenträger und die Trennkupplung einen weiteren Außenlamellenträger auf, wobei die erste Kupplung, die zweite Kupplung und die Trennkupplung radial übereinander gestapelt sind und zumindest im Wesentlichen axial überlappend angeordnet sind.

Es ist Aufgabe der Erfindung eine Mehrfachlamellenkupplungsanordnung insbesondere einen Dreifachlamellenkupplung für die Darstellung einer P2- Konfiguration in demselben Bauraum, wie er für eine Doppelkupplung der 2,5- Konfiguration benötigt wird, darzustellen, allerdings auch mit der Möglichkeit einen P1-Konfiguratio mit günstig herstellbaren Gleichteilen darzustellen.

### Beschreibung der Erfindung

Die Aufgabe wird gelöst mit einer Dreifachlamellenkupplung mit einer ersten, einer zweiten und einer dritten Reibkupplung, die radial versetzt zueinander angeordnete Lamellenpakte auf Lamellenträgern aufweisen, mit einem ersten Kolben, einem zweiten Kolben und einem dritten Kolben zur Aktuierung der ersten, zweiten und dritten Reibkupplung, wobei mindestens die an einer Hauptnabe angebundenen Lamellenträger und eine Zahnkranzträgerplatte aus Blechbauteilen bestehen, wobei ein erster, ein zweiter und ein dritter Fliehölausgleichskolben zusammen mit jeweils dem ersten, dem zweiten und dem dritten Kolben Fliehölausgleichsräume bildet, die radial versetzt zueinander angeordnet sind und über einen durchgehenden durch die Fliehölausgleichsräume führenden Kühlölpfad miteinander in Verbindung stehen.

Ein Blech ist ein Walzwerkserzeugnis aus Metall, das als Tafel ausgeliefert wird und dessen Breite und Länge sehr viel größer als seine Dicke sind. Durch ein entsprechendes Design kann ein Blechbauteil ein gegossenes oder gepresstes Bauteil ersetzen.

Die an der Hauptnabe angebundenen Lamellenträger sind über eine Ver schweißung in einem radial von der Hauptnabe sich erstreckenden Bereich, indem die Lamellenträger parallel zueinander verlaufen, versteift.

Damit wird die Steifigkeit der Lamellenträger erhöht.

Weiterhin wird ein an der Hauptnabe angebundene Lamellenträger über eine Verschweißung mit der Zahnkranzträgerplatte versteift.

Die Hauptnabe bildet eine Kante für das Fliehöl aus, die sich zur zentralen Achse A hin erstreckt.

Die Kante ist einteilig mit der Hauptnabe hergestellt, wobei ein Drehteil die Grundlage bietet.

Radial versetzt zueinander bedeutet, dass man, wenn man einem Strahl weg von der Mittenachse A folgt, nacheinander auf die Fliehölausgleichsräume stößt, die auch in einem radialen Abstand voneinander angeordnet sind.

Dadurch ist ein sehr kompakter Aufbau bei minimaler axialer Ausdehnung gegeben.

Es ist von Vorteil, dass der Kühlölpfad das Kühlöl über eine Hauptnabe, an der alle Kolben und Fliehölausgleichskolben drehfest befestigt sind, direkt in den dritten Fliehölausgleichsraum, der zur Hauptnabe benachbart und zwischen dem dritten Kolben und dem dritten Fliehölausgleichskolben liegt, führt.

Weiterhin führt der Kühlöpfad durch Öffnungen der Kolben und oder durch Öffnungen der Lamellenträger.

Der Kühlölpfad ist dabei einfach gehalten und das Kühlöl kann unter Fliehkraft nahezu direkt von der Hauptnabe nach außen zur äußersten Kupplung K0 und deren Fliehölausgleichsraum fließen.

Das Kühlöl ist durch eine gehäusefeste Drehdurchführung oder direkt durch die Hauptnabe geführt.

Die Umsetzung der Dreifachlamellenkupplung für die Darstellung eines P2 Hybridantriebs erfolgt, indem zwei der Reibkupplungen über einen gemeinsamen Lamellenträger verfügen.

Um Bauteile einzusparen ist es vorteilhaft, dass eine mit einer Eingangsnabe verbundenen und an einer der Lamellenträger angreifende Stützscheibe mit einer einteiligen Abstützung am Lamellenträger verbaut ist.

### Beschreibung der Figuren

Figur 1 zeigt eine erfindungsgemäße Ausführungsform mit gemeinsamer Antriebslamellenträger für die Kupplungen K0 und K1,
Figur 2 zeigt eine Ausführungsform mit gemeinsamer Antriebslamellenträger für Kupplungen K1 und K2,
Figur 3 zeigt eine Ausführung mit einer Öldurchführung in der sich drehende Hauptnabe im Kupplungsgehäuse,
Figur 4 zeigt den modularen Aufbau,
Figur 5 zeigt eine weitere Ausführungsform.

Alle Ausführungsformen sind konzentrische Dreifachlamellenkupplungen mit axial kurzer Bauweise und einer kostenoptimierten Struktur durch Verwendung von Blecheinbauten.

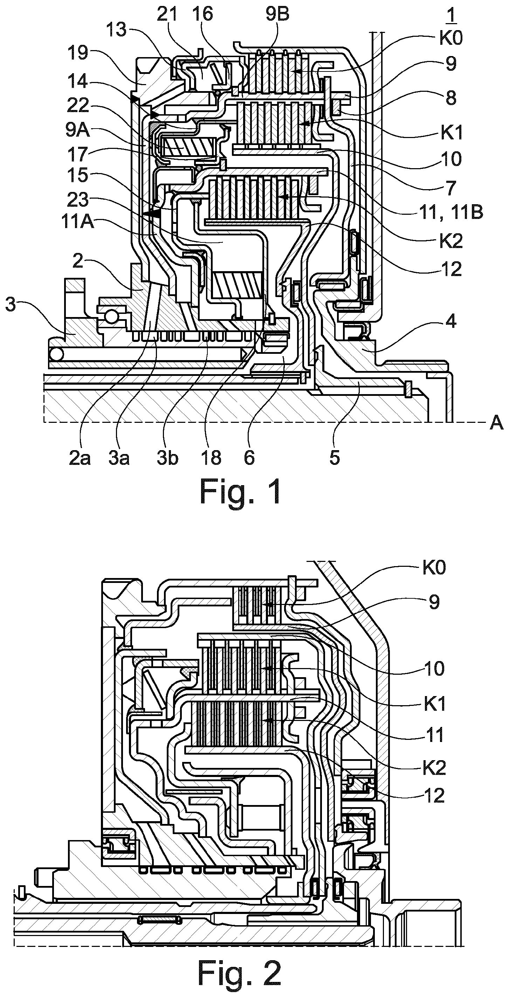

Figur 1 ist einen Dreifachlamellenkupplung 1 mit einer Kupplung K2, einer Kupplung K1 und einer Kupplung K0, die mit konzentrisch angeordneten Lamellenpaketen von innen nach außen angeordnet sind.

Die Lamellenpakte der drei Kupplungen K0, K1, K2 weisen in axialer Richtung gesehen keinen Versatz zueinander auf oder sind nur mit einem geringen Versatz zueinander verbaut.

Die Dreifachlamellenkupplung 1 weist einen Hauptnabe 2, die Öldurchführungen 2a aufweist. Die Ölzufuhr erfolgt über eine Drehdurchführung 3, die Öldurchführungen 3a aufweist, die von Kolbenringen 3b gedichtet werden.

Eine Eingangsnabe 4 umgreift eine erste Ausgangsnabe 5 und eine zweite Ausgangsnabe 6. An der Eingangsnabe 4 ist eine Stützscheibe 7 angebracht, die über eine Abstützung 8 mit einem gemeinsamen Lamellenträger 9 für die Kupplungen K0 und K1 verbunden ist.

Die Abstützung 8 ist in diesem Ausführungsbeispiel mehrteilig aufgebaut. Der gemeinsame Lamellenträger 9 dient als Innenlamellenträger der Kupplung K0 und als Außenlamellenträger der Kupplung K1. Der Innenlamellenträger 10 der Kupplung K1 ist mit der ersten Ausgangsnabe 5 verbunden. Die Kupplung K2 weist einen Außenlamellenträger 11 und einen Innenlamellenträger 12 auf, wobei der Innenlamellenträger 12 mit der zweiten Ausgangsnabe 6 in Verbindung steht.

Betätigt werden die drei Kupplungen K0, K1, K2 mit Hilfe eines ersten Kolbens 13, eines zweiten Kolbens 14 und eines dritten Kolbens 15. Alle drei Kolben 13, 14, 15 sind auf derselben Seite der Dreifachlamellenkupplung 1 angeordnet, die der Eingangsnabe 4 gegenüberliegt. Die Kolben 14, 15 sind dabei radial übereinander versetzt und liegen innerhalb von Korbabschnitten 9A, 11A der Lamellenträger 9, 11, die jeweils mit der Hauptnabe 2 verbunden sind. Die Abschnitte 9A und 11A verlaufen über einen großen radialen Bereich parallel zueinander, bis sie in rechtwinklig davon verlaufenden Bereiche 9B und 11B der Lamellenträger münden. Ein Kolbenträger 19 für den ersten Kolben 13 verläuft ebenfalls parallel zu den radiale verlaufenden Abschnitten 9A und 11A der Lamellenträger.

Weiterhin weist die Dreifachlamellenkupplung 1 noch Fliehölausgleichskolben auf, einen ersten Fliehölausgleichskolben 16, einen zweiten Fliehölausgleichskolben 17 und einen dritten Fliehölausgleichskolben 18.

Der erste Kolben 13 und der erste Fliehölausgleichskolben 16 bilden einen ersten Fliehölausgleichsraum 21.

Der zweite Kolben 14 und der zweite Fliehölausgleichskolben 17 bilden einen zweiten Fliehölausgleichsraum 22.

Der dritte Kolben 15 und der dritte Fliehölausgleichskolben 18 bilden einen dritten Fliehölausgleichsraum 23.

Die Fliehölausgleichsräume 21, 22, 23 sind konzentrisch zueinander mit einem radialen Abstand zueinander angeordnet, wobei alle drei Fliehölausgleichsräumen 21, 22, 23 miteinander verbunden sind. Der radiale Versatz der Fliehölausgleichsräume, der auch keinen radialen Überlapp der Fliehölausgleichsräume zulässt, ermöglicht eine kompakte Bauweise in axialer Richtung.

Die äußeren Fliehölausgleichsräume werden über den dritten Fliehölausgleichsraum 23 befüllt, der über eine Öffnung 24 im dritten Kolben 15 sowie einer Öffnung 25 im Außenlamellenträger 12 der Kupplung K2 den zweiten Fliehölausgleichsraum 22 füllt. Der zweite Fliehölausgleichsraum 22 befüllt über einen Kanal, eine Öffnung 26 zwischen den Bauteilen des zweiten Kolbens 14 und eine Öffnung 27 im gemeinsamen Lamellenträger 9 den ersten Fliehölausgleichsraum 21.

Damit erhält man einen durchgängigen Fliehölstrom von der Hauptnabe 4 aus bis zum ersten Fliehölausgleichsraum 21.

In der Figure 2 wird eine alternative Lösung vorgestellt, die sich lediglich dadurch unterscheidet, dass ein gemeinsamer Lamellenträger 11 die beiden Kupplungen K1 und K2 trägt und die Kupplung K0 dagegen separat mit eigenen Innenlamellenträger 9 und Außenlamellenträger geführt ist.

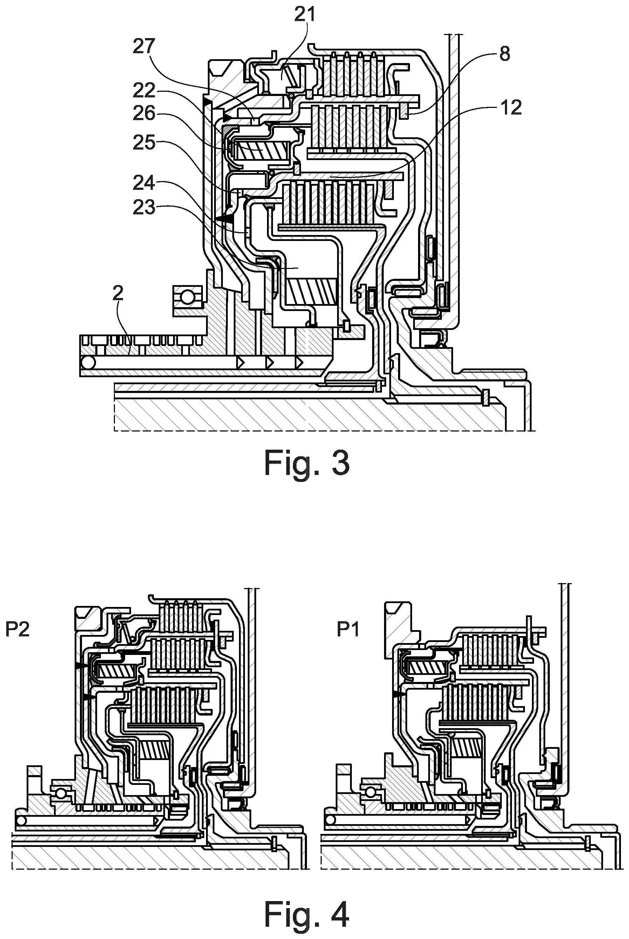

Figur 3 zeigt einen Ausführungsform, die im Wesentlichen der Kupplungsanordnung und Kühlölverläufe der Figur 1 entspricht.

Im Unterschied zur Lösung der Figur 1 ist die radiale Stützscheibe 7 nicht mehrteilig, sondern einteilig ausgeführt, was Kosten reduziert.

Als Weiteren ist die Drehdurchführung 3 zur Öldurchführung durch die sich drehende Hauptnabe 2 im Kupplungsgehäuse ersetzt worden. Der Wegfall der Drehdurchführung 3 als separates Bauteil reduziert Kosten.

Die Dreifachlamellenkupplung 1 ist zur Ausgestaltung eines P2 Hybridantriebs ausgelegt und ermöglicht es der elektrischen Maschine, die ausgangsseitig von der der Kupplung K0 aber vor den Kupplungen des Doppelkupplungsgetriebes eingreift, zugkraftunterbrechungsfrei mit dem Doppelkupplungsgetriebe zu schalten.

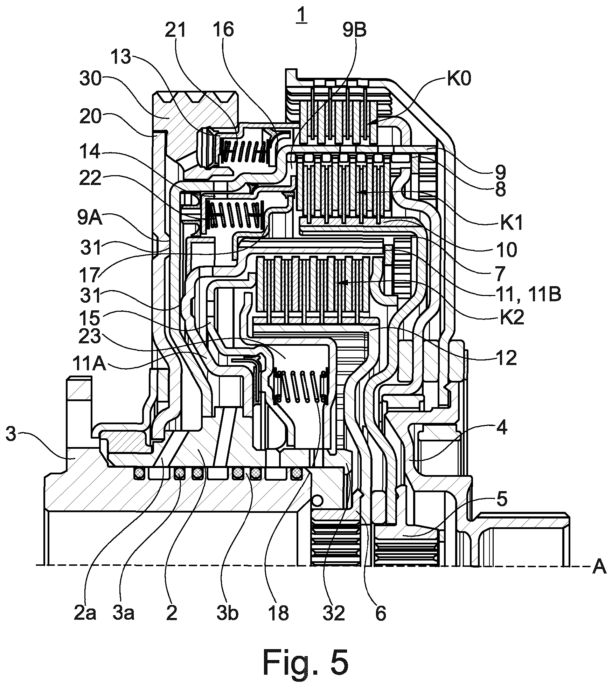

Figur 5 zeigt eine weitere Ausführungsform, in der die verwendeten Blechteile weiter optimiert sind.

Die Hauptnabe 2 ist als Drehteil ausgelegt und trägt unter anderen die Lamellenträger 9 und 11. Auch eine Zahnkranzträgerplatte 20 ist direkt mit der Hauptnabe 2 verbunden. Die Hauptnabe 2 ist mit einem möglichst geringen Durchmesser ausgelegt, um geringe Schweißdurchmesser für die zu verschweißenden Komponenten zu ermöglichen. Der Durchmesser der Schweißnähte und somit der Hauptnabe 2 sind dabei für die berechnete Belastung vorgegeben.

Die Zahnkranzträgerplatte 20 ist auf jeden Fall mit der Hauptnabe 2 verschweißt, während die Lamellenträger 9, 11 auch mit einem Presssitz verbunden sein können.

Auf der von der Hauptnabe wegweisenden Außenradius der Zahnkranzträgerplatte 20 sitzt einen Zahnkranz 30, das zur Anbindung der elektrischen Maschine des Antriebsstrangs gehört.

Die Blechstanzsteile der Lamellenträger 9, 11 sowie die Zahnkranzträgerplatte 20 sind gegebenenfalls zu flexibel, um dem beaufschlagten Anpressdruck standzuhalten. Daher ist eine Steifigkeitserhöhung wünschenswert. Diese Steifigkeitserhöhung erreicht man mit einer Verschweißung 31 zwischen Segmenten wie der Zahnkranzträgerplatte 20 mit dem Lamellenträger 9 und dem Lamellenträger 9 mit dem Lamellenträger 11. Diese Versteifungen durch die Verschweißung 31 erfolgt im Bereich, der sich von der Hauptnabe 2 aus radial nach außen erstreckt, in dem die Segmente parallel zueinander verlaufen.

Je nach Auslegung der Dreifachlamellenkupplung 1 erfolgen die Verschweißungen beide oder alternativ nur einen der beiden Verschweißungen 31.

Eine weitere Verbesserung ergibt sich durch die Ausgestaltung des Hauptnabe 2 als Drehteil. Die Hauptnabe 2 ist ungehärtetes Material, das einfach zu bearbeiten ist. Diese Hauptnabe mündet in Richtung auf die Ausgangsnaben 5, 6, in einer Kante 32, die im Schnittbild als Nase wiedergegeben ist.

Die Kante ist einstückig mit der Hauptnabe hergestellt und begrenzt den darunterliegenden Stauraum des Fliehöls und dient als Fliehölkante.

Wie in der Figur 4 dargestellt ist die Dreifachlamellenkupplung 1 so aufgebaut, dass auch die äußerste Kupplung K0 weggelassen werden kann und man damit einen P1 Hybridantrieb realisieren kann. Bei der P1-Auslegung sitzt der elektrische Motor noch vor Getriebe auf der Kurbelwelle, entspricht also funktional weitgehend der getriebeseitigen P2-Anordnung auf der Getriebeeingangswelle.

Der Bauraum bleibt dabei bei allem Ausführungsformen der Erfindung gleich, der Gesamtaufbau ebenfalls, es werden nur die der Kupplung K0 zugeordneten Bauteile weggelassen.

### Bezugszeichen

1 Dreifachlamellenkupplung
2 Hauptnabe
2a Öldurchführungen
3 Drehdurchführung
3a Öldurchführungen
3b Kolbenringe
4 Eingangsnabe
5, 6 Ausgangsnabe
7 Stützscheibe
8 Abstützung
9, 10, 11, 12 Lamellenträger
9A, 11A Korbabschnitt
9B, 11B rechtwinklig verlaufende Bereiche der Lamellenträger
13, 14, 15 Kolben
16, 17, 18 Fliehölausgleichskolben
19 Kolbenträger
20 Zahnkranzträgerplatte
21, 22, 23 Fliehölausgleichsräume
24, 25, 26, 27 Öffnungen
30 Zahnkranz
31 Verschweißungen
32 Kante
K0, K1, K2 Reibkupplung
A Achse

## Patentansprüche

1. Mehrfachlamellenkupplungsanordnung als Dreifachlamellenkupplung (1) mit einer ersten, einer zweiten und einer dritten Reibkupplung (K0, K1, K2), die radial versetzt zueinander angeordnete Lamellenpakte auf Lamellenträgern (9, 10, 11, 12) aufweisen, mit einem ersten Kolben (13), einem zweiten Kolben (14) und einem dritten Kolben (15) zur Aktuierung der ersten, zweiten und dritten Reibkupplung (K0, K1, K2), wobei mindestens die an einer Hauptnabe (2) angebundenen Lamellenträger (9, 10,11,12) und eine Zahnkranzträgerplatte (20) aus Blechbauteilen bestehen, wobei ein erster, ein zweiter und ein dritter Fliehölausgleichskolben (16, 17, 18) zusammen mit jeweils dem ersten, dem zweiten und dem dritten Kolben (13, 14, 15) Fliehölausgleichsräume (21, 22, 23) bildet, **dadurch gekennzeichnet, dass** die Fliehölausgleichsräume (21, 22, 23) radial versetzt zueinander angeordnet sind und über einen durchgehenden durch die Fliehölausgleichsräume (21, 22, 23) führenden Kühlölpfad miteinander in Verbindung stehen.

2. Mehrfachlamellenkupplungsanordnung als Dreifachlamellenkupplung (1) nach Anspruch 1 **dadurch gekennzeichnet, dass** der Kühlölpfad das Kühlöl über eine Hauptnabe (4), an der alle Kolben (13, 14, 15) und Fliehölausgleichskolben (16, 17, 18) drehfest befestigt sind, direkt in den dritten Fliehölausgleichsraum (23, der zur Hauptnabe (2) benachbart und zwischen dem dritten Kolben und dem dritten Fliehölausgleichskolben liegt, führt.

3. Mehrfachlamellenkupplungsanordnung als Dreifachlamellenkupplung (1) nach Anspruch 1 oder 2 **dadurch gekennzeichnet, dass** der Kühlöpfad durch Öffnungen der Kolben (24) und/oder durch Öffnungen (25, 26) von Lamellenträgern führt.

4. Mehrfachlamellenkupplungsanordnung als Dreifachlamellenkupplung (1) nach einem der vorhergehenden Ansprüche, **dadurch gekennzeichnet, dass** das Kühlöl durch eine gehäusefeste Drehdurchführung (3) oder direkt durch die Hauptnabe (2) geführt ist.

5. Mehrfachlamellenkupplungsanordnung als Dreifachlamellenkupplung (1) nach einem der vorhergehenden Ansprüche, **dadurch gekennzeichnet, dass** zwei der Reibkupplungen (K0 und K1 oder K1 und K2) über einen gemeinsamen Lamellenträger (9 oder 11) verfügen.

6. Mehrfachlamellenkupplungsanordnung als Dreifachlamellenkupplung (1) nach einem der vorhergehenden Ansprüche, **dadurch gekennzeichnet, dass** eine Stützscheibe (7) an der Eingangsnabe (4) angebracht ist, die über eine einteilige oder mehrteilige Abstützung (8) mit einem der Lamellenträger (9) verbunden ist.

7. Mehrfachlamellenkupplungsanordnung nach Anspruch 1, **dadurch gekennzeichnet, dass** die an der Hauptnabe (2) angebundenen Lamellenträger (9, 11) über eine Verschweißung (31) in einem radial von der Hauptnabe sich erstreckenden Bereich, indem die Lamellenträger parallel zueinander verlaufen, versteift sind.

8. Mehrfachlamellenkupplungsanordnung nach Anspruch 1 oder 7, **dadurch gekennzeichnet, dass** ein an der Hauptnabe (2) angebundene Lamellenträger (9) über eine Verschweißung (31) mit der Zahnkranzträgerplatte (20) versteift ist.

9. Mehrfachlamellenkupplungsanordnung nach einem der vorhergehenden Ansprüche, **dadurch gekennzeichnet, dass** die Hauptnabe (2) eine Kante (32) für das Fliehöl ausbildet, die sich zur zentralen Achse A hin erstreckt.

## Claims

1. Multiple disc clutch arrangement in the form of a triple disc clutch (1), having a first, a second and a third friction clutch (K0, K1, K2) which have disc packs on disc carriers (9, 10, 11, 12), which disc packs are arranged radially offset from one another, having a first piston (13), a second piston (14) and a third piston (15) for actuating the first, second and third friction clutches (K0, K1, K2), wherein at least a toothed ring carrier plate (20) and the disc carriers (9, 10, 11, 12) attached to a main hub (2) consist of sheet metal components, wherein a first, a second and a third centrifugal oil compensation piston (16, 17, 18) forms together with the first, the second and the third piston (13, 14, 15), respectively, a respective centrifugal oil compensation chamber (21, 22, 23), **characterized in that** centrifugal oil compensation chambers (21, 22, 23) are arranged radially offset from one another and are connected to one another via a continuous cooling oil path which leads through the centrifugal oil compensation chambers (21, 22, 23).

2. Multiple disc clutch arrangement in the form of a triple disc clutch (1) according to Claim 1, **characterized in that** the cooling oil path conducts the cooling oil via a main hub (4), to which all the pistons (13, 14, 15) and centrifugal oil compensation pistons (16, 17, 18) are fastened in a rotationally conjoint manner, directly into the third centrifugal oil compensation chamber (23), which is situated adjacent to the main hub (2) and between the third piston and the third centrifugal oil compensation piston.

3. Multiple disc clutch arrangement in the form of a triple disc clutch (1) according to Claim 1 or 2, **characterized in that** the cooling oil path leads through openings in the pistons (24) and/or through openings (25, 26) in disc carriers.

4. Multiple disc clutch arrangement in the form of a triple disc clutch (1) according to one of the preceding claims, **characterized in that** the cooling oil is conducted through a rotary leadthrough (3), which is fixed in relation to a housing, or directly through the main hub (2).

5. Multiple disc clutch arrangement in the form of a triple disc clutch (1) according to one of the preceding claims, **characterized in that** two of the friction clutches (K0 and K1 or K1 and K2) have a common disc carrier (9 or 11).

6. Multiple disc clutch arrangement in the form of a triple disc clutch (1) according to one of the preceding claims, **characterized in that** a support disc (7) connected via a one piece or multiple piece support (8) to one of the disc carriers (9) is attached to the input hub (4).

7. Multiple disc clutch arrangement according to Claim 1, **characterized in that** the disc carriers (9, 11) attached to the main hub (2) are reinforced via a welded connection (31) in a region which extends radially from the main hub and in which the disc carriers extend parallel to one another.

8. Multiple disc clutch arrangement according to Claim 1 or 7, **characterized in that** a disc carrier (9) attached to the main hub (2) is reinforced via a welded connection (31) to the toothed ring carrier plate (20).

9. Multiple disc clutch arrangement according to one of the preceding claims, **characterized in that** the main hub (2) forms an edge (32) for the centrifugal oil, which extends towards the central axis A.

## Revendications

1. Agencement d'embrayage à disques multiples, sous forme d'embrayage à trois disques (1), présentant un premier, un deuxième et un troisième embrayage à friction (K0, K1, K2), qui présentent des empilements de disques agencés de manière radialement décalée les uns aux autres sur des supports (9, 10, 11, 12) de disque, présentant un premier piston (13), un deuxième piston (14) et un troisième piston (15) pour l'actionnement du premier, du deuxième et du troisième embrayage à friction (K0, K1, K2), au moins le support (9, 10, 11, 12) de disque relié à un moyeu principal (2) et une plaque support (20) de couronne dentée étant constitués de pièces en tôle, un premier, un deuxième et un troisième piston de compensation (16, 17, 18) d'huile soumise à une force centrifuge formant, conjointement avec à chaque fois le premier, le deuxième et le troisième piston (13, 14, 15), des espaces de compensation (21, 22, 23) d'huile soumise à une force centrifuge, **caractérisé en ce que** les espaces de compensation (21, 22, 23) d'huile soumise à une force centrifuge sont agencés de manière radialement décalée les uns par rapport aux autres et sont reliés les uns aux autres par l'intermédiaire d'un trajet d'huile de refroidissement continu passant à travers les espaces de compensation (21, 22, 23) d'huile soumise à une force centrifuge.

2. Agencement d'embrayage à disques multiples, sous forme d'embrayage à trois disques (1) selon la revendication 1, **caractérisé en ce que** le trajet d'huile de refroidissement guide l'huile de refroidissement par l'intermédiaire d'un moyeu principal (4), auquel sont reliés, de manière solidaire en rotation, tous les pistons (13, 14, 15) et pistons de compensation (16, 17, 18) d'huile soumise à une force centrifuge, directement dans le troisième espace de compensation (23) d'huile soumise à une force centrifuge, qui est adjacent au moyeu principal (2) et situé entre le troisième piston et le troisième piston de compensation d'huile soumise à une force centrifuge.

3. Agencement d'embrayage à disques multiples, sous forme d'embrayage à trois disques (1) selon la revendication 1 ou 2, **caractérisé en ce que** le trajet d'huile de refroidissement passe à travers des ouvertures du piston (24) et/ou à travers des ouvertures (25, 26) de supports de disque.

4. Agencement d'embrayage à disques multiples, sous forme d'embrayage à trois disques (1) selon l'une des revendications précédentes, **caractérisé en ce que** l'huile de refroidissement est guidée à travers un passage tournant (3) solidaire du carter ou directement à travers le moyeu principal (2).

5. Agencement d'embrayage à disques multiples, sous forme d'embrayage à trois disques (1) selon l'une des revendications précédentes, **caractérisé en ce que** deux des embrayages à friction (K0 et K1 ou K1 et K2) disposent d'un support (9 ou 11) de disque commun.

6. Agencement d'embrayage à disques multiples, sous forme d'embrayage à trois disques (1) selon l'une des revendications précédentes, **caractérisé en ce qu'**un disque support (7) est disposé sur le moyeu d'entrée (4) qui est relié par l'intermédiaire d'un appui (8) en une ou plusieurs pièces à l'un des supports (9) de disque.

7. Agencement d'embrayage à disques multiples selon la revendication 1, **caractérisé en ce que** les supports (9, 11) de disque reliés au moyeu principal (2) sont rigidifiés par l'intermédiaire d'une soudure (31) dans une zone s'étendant radialement par rapport au moyeu principal, les supports de disque s'étendant parallèlement les uns par rapport aux autres.

8. Agencement d'embrayage à disques multiples selon la revendication 1 ou 7, **caractérisé en ce qu'**un support (9) de disque relié au moyeu principal (2) est rigidifié par l'intermédiaire d'une soudure (31) avec la plaque support (20) de couronne dentée.

9. Agencement d'embrayage à disques multiples selon l'une des revendications précédentes, **caractérisé en ce que** le moyeu principal (2) forme un bord (32) pour l'huile soumise à une force centrifuge qui s'étend vers l'axe central A.
